(19) Europäisches Patentamt / European Patent Office / Office européen des brevets

(11) EP 2 926 985 B1

(12) **EUROPEAN PATENT SPECIFICATION**

(45) Date of publication and mention of the grant of the patent:
**14.03.2018 Bulletin 2018/11**

(21) Application number: **12889173.6**

(22) Date of filing: **28.11.2012**

(51) Int Cl.:
***B32B 7/12*** *(2006.01)* ***B32B 1/00*** *(2006.01)*
***B32B 27/08*** *(2006.01)* ***B32B 27/36*** *(2006.01)*
***B32B 27/30*** *(2006.01)* ***B32B 27/28*** *(2006.01)*
***B32B 15/08*** *(2006.01)* ***B32B 15/18*** *(2006.01)*
***B32B 15/20*** *(2006.01)* ***B32B 27/18*** *(2006.01)*
***B32B 27/20*** *(2006.01)* ***B32B 27/34*** *(2006.01)*
***B32B 27/40*** *(2006.01)* ***B32B 3/28*** *(2006.01)*
***B32B 27/32*** *(2006.01)*

(86) International application number:
**PCT/JP2012/080776**

(87) International publication number:
**WO 2014/083643 (05.06.2014 Gazette 2014/23)**

(54) **ARTICLE HAVING GLASS-LIKE DESIGN**

ARTIKEL MIT GLASDESIGN

ARTICLE AYANT UNE CONCEPTION SEMBLABLE À DU VERRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**07.10.2015 Bulletin 2015/41**

(73) Proprietor: **Riken Technos Corp.**
**Chuo-ku**
**Tokyo 103-8438 (JP)**

(72) Inventor: **SHIOTA, Satoshi**
**Tokyo 103-8438 (JP)**

(74) Representative: **Fenlon, Christine Lesley**
**Haseltine Lake LLP**
**Lincoln House, 5th Floor**
**300 High Holborn**
**London WC1V 7JH (GB)**

(56) References cited:
**JP-A- 2002 113 833**
**JP-A- 2002 225 070**
**JP-A- 2004 276 496**
**JP-A- 2009 291 960**
**JP-A- 2012 210 792**
**US-A1- 2010 080 968**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### Technical Field

The present invention relates to an article having a glass-like aesthetic appearance, and more particularly to an article having a curved surface with a large curvature while having a glass-like aesthetic appearance.

### Background Art

Glass is a material that essentially has high detergent resistance, solvent resistance, scratch resistance and stain resistance. Glass's impact resistance, which is a drawback of the material, has also been improved by the use of an intermediate film such as polyvinyl butyral film. Because of its unique transparent appearance, glass has been favorably used in various articles including refrigerator doors and kitchen door panels. Nonetheless, the poor bending workability of glass makes it unsuitable for use in decorative purposes for articles having a curved surface. Thus, its use has been limited to flat articles thus far. Furthermore, articles with glass decoration inevitably become heavy due to the specific gravity of glass (2.5).

Accordingly, transparent resins have been proposed as an alternative to glass. For example, Patent Document 1 describes a glass substitute for use as an exterior material of various articles, such as a glazing material of automobiles. Specifically, it describes "an acrylic resin composition characterized by containing, with respect to 100 parts by mass of an acrylic resin, 1 to 50 parts by mass of colloidal silica having an average particle size of 50 nm or less, and by having a total light transmittance in the visible light region of 85% or higher and a haze of 1.5% or lower after melt processing." This approach does not provide sufficient bending workability and is also not applicable to the decoration of articles that have surfaces with a large curvature (i.e., tightly curved surfaces).

Also, Patent Document 2 describes a mirror-surfaced decorative panel having a small rounded end such as small corner R and having high specularity. Specifically, it describes "a mirror-surfaced decorative panel formed of a mirror-surfaced decorative sheet disposed on a substrate, the mirror-surfaced decorative sheet comprising a transparent resin film having a thickness of 50 to 300 μm and a haze value of less than 1%, and a resin film layer having a thickness of 200 to 900 μm, the resin film layer being laminated onto the mirror-surfaced decorative sheet with a decorative layer disposed therebetween such that the total thickness is 400 to 1000 μm, the mirror-surfaced decorative panel being characterized in that at least one end thereof is rounded by the direct post-forming process." This approach also has a drawback in that the aesthetic appearance is affected in the region around curved surfaces due to the wedge-shaped portions where only the mirror-surfaced decorative sheet remains. Patent Document 3 discloses a curved decorative sheet comprising the following layers in this order from outside to inside, a) a transparent surface protective layer (16) having a haze of 1 % and a thickness of 400 μm; b) an adhesive layer (15); c) a filling layer (14); d) a porous decor sheet (13); and e) a base material-side adhesion layer (11). The surface protective layer (16) is configured as a laminate sheet, which includes a transparent hard-coat sheet (161) that contains polymethylmethacrylate as a main component, and a transparent clear sheet (162) that contains a composite resin materials of Polycarbonate (PC) and polybutylene terephthalate (PBT).

### Citation List

#### Patent Document

Patent Document 1: JP-A-2008-174613
Patent Document 2: JP-A-2012-210792
Patent Document 3: US 2010/080968


### Summary of Invention

#### Problem to be Solved by the Invention

Accordingly, it is an objective of the present invention to provide an article that has a curved surface with a large curvature while having a glass-like aesthetic appearance.

Means for Solving the Problem

The present invention is defined in claim 1. Optional embodiments are defined in the dependent claims.

Accordingly, the present invention is as follows:

1. An article comprising, from the surface side, a hard coat (E), a transparent resin sheet (A) and a substrate sheet (B) in this order, the article having a curved surface,
wherein the transparent resin sheet (A) has a haze of 10% or less and a thickness of 0.2 to 10 mm, where haze is determined according to J1S K 7105; and
wherein the curved surface is formed by bending the substrate sheet (B) side inward;
wherein the minimum value of the bend radius of the curved surface is 500 mm or less; and
wherein the article is formed by curing a coating material comprising an active energy ray-curable resin composition in which the hard coat (E) comprises:

(α) an ethanolamine-modified polyether (meth)acrylate having the following formula (1):

(Chemical Formula 1)

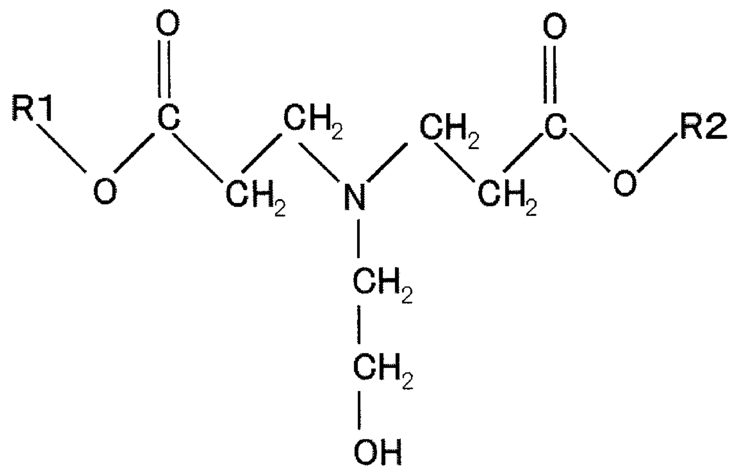

(1)

wherein R1 and R2 are each a polyether (meth) acrylate residue having one or more (meth) acryloyloxy groups, provided that the total number of the (meth)acryloyloxy groups in R1 and the (meth)acryloyloxy groups in R2 is equal to or greater than 3;
(β) a polyisocyanate having two or more isocyanate groups in one molecule thereof; and
(γ) a photopolymerization initiator,

wherein the ratio (a/b) of the number (a) of hydroxyl groups in the component (α) to the number (b) of isocyanate groups in the component (β) is in the range of 0.5 to 1.2.

2. The article according to item 1 above, wherein the substrate sheet (B) is a laminate of a thermoplastic resin unstretched sheet (B-1) and a biaxially stretched polyester resin film (B-2) and the article includes, from the surface side, (A), (B-2) and (B-1) in this order.

3. The article according to item 1 or 2 above, wherein the article includes a printed layer (C) between the transparent resin sheet (A) and the substrate sheet (B).

4. The article according to the item 2 above, wherein the article further includes a printed layer (C) between the transparent resin sheet (A) and the substrate sheet (B) and/or between the thermoplastic resin unstretched sheet (B-1) and the biaxially stretched polyester resin film (B-2).

5. The article according to any of the items 1 to 4 above, wherein the transparent resin sheet (A) includes at least one layer selected from the group consisting of a layer of acrylic resin sheet (A1), a layer of aromatic polycarbonate resin sheet (A2), and a layer of amorphous or low crystalline aromatic polyester resin sheet (A3) .

6. The article according to any of the items 1 to 5 above, wherein the article further includes a layer of biaxially stretched polyester resin film (D) between the hard coat layer (E) and the transparent resin sheet (A).

7. The article according to the item 6 above, wherein the article further includes a printed layer (F) between the transparent resin sheet (A) and the biaxially stretched polyester resin film (D).

Effect of the Invention

The article of the present invention, which includes, from the surface side, a hard coat (E), a transparent resin sheet (A) and a substrate sheet (B) stacked in this order so as to appropriately control the haze and the thickness of the transparent resin sheet (A), can achieve a glass-like aesthetic appearance while having a curved surface with a large curvature. Thus, the article of the present invention is suitable for use in refrigerator doors and kitchen door panels and other articles that have curved surfaces with large curvatures and are desired to have glass-like aesthetic appearance. Moreover, the hard coat (E) is of a specific type which provides articles with high surface hardness, scratch resistance and stain resistance.

Brief Description of Drawings

FIG. 1 is a diagram illustrating a radius of curvature.
FIG. 2 is a schematic cross-sectional view illustrating an article including a printed layer (C).
FIG. 3 is a schematic cross-sectional view illustrating an embodiment of the present invention in which a hard coat (E) is disposed on the surface side of a transparent resin sheet (A).
FIG. 4 is a schematic cross-sectional view illustrating an article including a biaxially stretched polyester resin film (D) disposed on the surface side of a transparent resin sheet (A).
FIG. 5 is a schematic cross-sectional view illustrating an embodiment of the present invention further including a biaxially stretched polyester resin film (D) disposed between a hard coat layer (E) and a transparent resin sheet (A).
FIG. 6 is a schematic cross-sectional view illustrating an article further including a printed layer (F) disposed between a biaxially stretched polyester resin film (D) and a transparent resin sheet (A).
FIG. 7 is a schematic cross-sectional view illustrating a portion of an article embodying the present invention after a bending process.

Best Mode for Carrying Out the Invention

The present invention will now be described in further detail. An article of the present invention includes, from the surface side, a hard coat (E), a transparent resin sheet (A) and a substrate sheet (B) in this order.
The transparent resin sheet (A) must be transparent to impart a glass-like aesthetic appearance to the article. Specifically, the transparent resin sheet (A) must have a haze value of 10% or less. The transparent resin sheet (A) preferably has a haze value of 6% or less, more preferably 4% or less, and most preferably 2% or less.
Since clear transparent appearance is generally preferred, the lower limit of the haze value is not limited to any specific value and a smaller haze is preferred although the lower limit may depend on the nature of the glass-like appearance one desires to impart. The haze value was determined according to JIS K 7105.
The transparent resin sheet (A) must have a thickness of 0.2 mm or greater. If the thickness is less than 0.2 mm, then the resin sheet may not achieve desirable depth impression and the glass-like appearance may not be achieved. The thickness is preferably 0.5 mm or greater, more preferably 1 mm or greater.
Furthermore, the thickness of the transparent resin sheet (A) must be 10 mm or less to allow for the production of articles having curved surfaces with large curvatures. If the thickness exceeds 10 mm, then the bending may become difficult. The thickness is preferably 6 mm or less, more preferably 4 mm or less.
Since the article of the present invention has a curved surface, the transparent resin sheet (A) is preferably bendable by itself. In particular, the transparent resin sheet (A) is preferably such that the minimum value of the bend radius of the curved surface of the transparent resin sheet (A) (which may be referred to as "minimum bend radius," hereinafter) is 500 mm or less. The minimum bend radius is more preferably 50 mm or less, even more preferably 15 mm or less, and most preferably 10 mm or less.
The lower limit of the minimum bend radius is not limited to any specific value. A smaller radius can lead to an article having a curve surface with a larger curvature and is thus preferred.
The minimum bend radius is a bend radius that the sheet has immediately before any crack forms on the surface of the bent portion as the sheet is being bent. It serves as an index for the limit of the bending process. The bend radius

is defined in a similar manner to the radius of curvature as described below.

The minimum bend radius was measured based on JIS-K 6902 (bend formability; process B). Specifically, a test piece was conditioned at a temperature of 23°C ± 2°C at a relative humidity of 50 ± 5% for 24 hours. The substrate sheet (B) side of the test piece was bent inward at a bend process temperature of 23°C ± 2°C along a direction perpendicular to the machine direction to form a curved surface. Of the different forming jigs that did not cause any cracks in the test piece, one with the smallest front face radius was selected and its radius was designated as the minimum bend radius.

The transparent resin sheet (A) includes an acrylic resin sheet formed of an acrylic resin composition (A1), an aromatic polycarbonate resin sheet formed of an aromatic polycarbonate resin composition (A2), and an amorphous or low crystalline aromatic polyester resin sheet formed of an amorphous or low crystalline aromatic polyester resin composition (A3). The transparent resin sheet (A) formed of these resin sheets encompasses laminates of any combination of the above-described (A1), (A2) and (A3).

Preferred laminates include a laminate of a high hardness acrylic resin sheet and a flexible acrylic resin sheet, and a laminate of an acrylic resin sheet and an aromatic polycarbonate resin sheet. Laminates of sheets of exactly the same type of resin are also one example of preferred laminates from the viewpoint of manufacturability.

The above-described laminates can be obtained by any suitable method. For example, a method in which individual resin sheets obtained by the technique described below or a similar technique is dry-laminated or thermally laminated; a method in which individual constituent materials are melted together through an extruder and processed with T-die coextrusion using a feed block technique or a multi-manifold technique; and a method in which at least one resin sheet is obtained by the technique described below or a similar technique and other resin sheets are melt-extruded onto the sheet (lamination by extrusion) are exemplified.

Examples of the above-described acrylic resin composition include resin compositions containing:

one or a mixture of two or more of acrylic resins (A1-1), including copolymers including (meth)acrylate esters, such as poly(methyl(meth)acrylate), poly(ethyl(meth)acrylate), poly(propyl(meth)acrylate), poly(butyl(meth)acrylate), methyl(meth)acrylate-butyl(meth)acrylate copolymers, and ethyl(meth)acrylate-butyl(meth)acrylate copolymer; and (meth)acrylate esters such as ethylene-methyl(meth)acrylate copolymer, and styrene-methyl(meth)acrylate copolymer;

along with one or a mixture of two or more of core shell rubbers (A1-2), including methacrylate-styrene/butadiene rubber graft copolymers, acrylonitrile-styrene/butadiene rubber graft copolymers, acrylonitrile-styrene/ethylene-propylene rubber graft copolymers, acrylonitrile-styrene/acrylate graft copolymers, methacrylate/acrylate rubber graft copolymers, and methacrylate-acrylonitrile/acrylate rubber graft copolymers. As used herein, "Meth(acryl)" refers to acryl or methacryl.

The respective proportions of the (A1-1) and the (A1-2) are preferably 50 to 85 parts by mass (A1-1) and 50 to 15 parts by mass (A1-2), and more preferably 60 to 75 parts by mass (A1-1) and 40 to 25 parts by mass (A1-2), based on the total mass of the (A1-1) and the (A1-2) (i.e., 100 parts by mass).

Optional components that can be added to the acrylic resin composition include thermoplastic resins other than the acrylic resins or the core shell rubbers; pigments, inorganic fillers, organic fillers and resin fillers; additives such as lubricants, antioxidants, weather resistance stabilizers, thermostabilizers, mold release agents, antistatics and surfactants.

The amount of these optional components is typically from about 0.1 to about 10 parts by mass based on the total amount of the (A1-1) and the (A1-2) (i.e., 100 parts by mass).

Examples of the above-described aromatic polycarbonate resin composition include resin compositions containing:

one or a mixture of two or more of aromatic polycarbonate resins (A2-1), including polymers obtained through the interfacial polymerization of an aromatic dihydroxyl compound such as bisphenol A with phosgene; and polymers obtained through the transesterification of an aromatic dihydroxyl compound such as bisphenol A with a carbonic acid diester such as diphenyl carbonate;

along with one or a mixture of two or more of core shell rubbers (A2-2), including methacrylate-styrene/butadiene rubber graft copolymers, acrylonitrile-styrene/butadiene rubber graft copolymers, acrylonitrile-styrene/ethylene-propylene rubber graft copolymers, acrylonitrile-styrene/acrylate graft copolymers, methacrylate/acrylate rubber graft copolymers, and methacrylate-acrylonitrile/acrylate rubber graft copolymers.

The respective proportions of the (A2-1) and the (A2-2) are preferably 95 to 100 parts by mass (A2-1) and 5 to 0 parts by mass (A2-2), and more preferably 97 to 99.5 parts by mass (A2-1) and 3 to 0.5 parts by mass (A2-2), based on the total mass of the (A2-1) and the (A2-2) (i.e., 100 parts by mass).

Optional components that can be added to the aromatic polycarbonate resin composition include thermoplastic resins other than the aromatic polycarbonate resins or the core shell rubbers; pigments, inorganic fillers, organic fillers and resin fillers; additives such as lubricants, antioxidants, weather resistance stabilizers, thermostabilizers, mold release agents, antistatics and surfactants.

The amount of these optional components is typically from about 0.1 to about 10 parts by mass based on the total amount of the (A2-1) and the (A2-2) (i.e., 100 parts by mass).

Examples of the above-described amorphous or low crystalline aromatic polyester resin composition include resin compositions containing:

one or a mixture of two or more of amorphous or low crystalline aromatic polyester resins (A3-1), including polyester copolymers composed of aromatic polyvalent carboxylic acid components, such as terephthalic acid, isophthalic acid, orthophthalic acid and naphthalenedicarboxylic acid, and polyhydric alcohol components, such as ethylene glycol, diethylene glycol, neopentyl glycol, 1,2-butanediol, 1,3-butanediol, 1,4-butanediol, 1,5-pentanediol, 3-methyl-1,5-pentanediol, 2-methyl-1,3-propanediol and 1,4-cyclohexanedimethanol, more specifically, a glycol-modified polycyclohexylene dimethylene terephthalate (PCTG) composed of 100 mol% of terephthalic acid, 42 to 32 mol% of ethylene glycol and 58 to 68 mol% of 1,4-cyclohexanedimethanol; and a acid-modified polycyclohexylene dimethylene terephthalate (PCTA) composed of 50 to 99 mol% of terephthalic acid, 1 to 50 mol% of isophthalic acid and 100 mol% of 1,4-cyclohexanedimethanol;

along with one or a mixture of two or more of core shell rubbers (A3-2), including methacrylate-styrene/butadiene rubber graft copolymers, acrylonitrile-styrene/butadiene rubber graft copolymers, acrylonitrile-styrene/ethylene-propylene rubber graft copolymers, acrylonitrile-styrene/acrylate graft copolymers, methacrylate/acrylate rubber graft copolymers, and methacrylate-acrylonitrile/acrylate rubber graft copolymers.

The respective proportions of the (A3-1) and the (A3-2) are preferably 95 to 100 parts by mass (A3-1) and 5 to 0 parts by mass (A3-2), and more preferably 97 to 99.5 parts by mass (A3-1) and 3 to 0.5 parts by mass (A3-2), based on the total mass of the (A3-1) and the (A3-2) (i.e., 100 parts by mass).

Optional components that can be added to the amorphous or low crystalline aromatic polyester resin composition include thermoplastic resins other than the amorphous or low crystalline aromatic polyester resins or the core shell rubbers; pigments, inorganic fillers, organic fillers and resin fillers; additives such as lubricants, antioxidants, weather resistance stabilizers, thermostabilizers, mold release agents, antistatics and surfactants.

The amount of these optional components is typically from about 0.1 to about 10 parts by mass based on the total amount of the (A3-1) and the (A3-2) (i.e., 100 parts by mass).

In the present description, a polyester is defined to be "amorphous or low crystalline" when the heat of fusion determined from the melting curve of DSC analysis is 60 J/g or less. Specifically, using Diamond differential scanning calorimeter (DSC) available from Perkin Elmer Japan, DSC analysis was conducted by subjecting the sample to a temperature program in which it was first maintained at 320°C for 5 minutes, then cooled at a decrease rate of 20°C/min to -50°C, at which it was maintained for 5 minutes and then heated at an increase rate of 20°C/min to 320°C.

The above-described (A1), (A2), (A3) or other thermoplastic resin compositions can be obtained by mixing the foregoing components using any suitable melt kneaders. Examples of the melt kneader include batch kneaders such as pressure kneaders and mixers; kneader extruders such as unidirectional twin screw extruders and bidirectional twin screw extruders; and calender roll kneaders. These kneaders may be used in any combination. The resulting resin composition is pelletized in any suitable manner and the resulting pellets are subsequently formed into a transparent resin sheet (A) either by using a calendering machine or by using an extruder and a T-die. The pelletization process may be carried out by the hot cut process, the strand cut process, the underwater cut process, or any other suitable processes. Alternatively, the melt-kneaded resin composition may be directly fed to the calendering machine or T-die and formed into the transparent resin sheet (A). The calendering machine may be any suitable calendering machine, including upright three roll type, upright four roll type, L-shaped four roll type, inverted L-shaped four roll type, and Z-shaped roll type. The extruder may be any suitable extruder, including single screw extruders, unidirectional twin screw extruders and bidirectional twin screw extruders. The T-die may be any suitable T-die, including manifold dies, fishtail dies and coat hanger dies.

In the present article, the substrate sheet (B) is situated underneath the transparent resin sheet (A) and serves both to ensure the bending workability and to provide aesthetic appearance.

The substrate sheet (B) may be, for example, a sheet of a thermoplastic resin, including a polyolefin resin, such as polyethylene, polypropylene, polybutene-1, poly(4-methylpentene-1), chlorinated polyethylene, ethylene-$\alpha$-olefin copolymer, ethylene-vinyl acetate copolymer, and ethylene- acrylate copolymer; a polyvinyl chloride resin, such as polyvinyl chloride, and vinyl chloride- vinyl acetate copolymer; a styrene resin, such as polystyrene, acrylonitrile-butadiene-styrene copolymer (ABS resin), styrene-ethylene-butadiene-styrene copolymer, and a hydrogenated product of styrene-ethylene-butadiene-styrene copolymer; a polyester resin, such as amorphous, low crystalline or crystalline polyester resin; a

polycarbonate resin; a polyamide resin; a polyurethane resin; an acrylic resin; a silicone resin; a polyvinylidene chloride resin; a fluorine-containing resin; and a chloroprene resin; and a thermoplastic resin composition thereof. These sheets include unstretched sheets, uniaxially stretched sheets and biaxially stretched sheets.

Optional components that can be added to the thermoplastic resin composition include pigments, inorganic fillers, organic fillers and resin fillers; additives such as lubricants, antioxidants, weather resistance stabilizers, thermostabilizers, mold release agents, antistatics and surfactants.

When the substrate sheet (B) is an unstretched sheet, such an unstretched sheet can be obtained by using the above-described. thermoplastic resin sheet or the thermoplastic resin composition in the same manner as in the above-described film production process.

When the substrate sheet (B) is a uniaxially stretched sheet or a biaxially stretched sheet, such a stretched sheet can be obtained by stretching a raw material sheet formed of the above-described unstretched sheet according to a known technique.

Alternatively, the substrate sheet (B) may be a metal sheet formed of metals such as iron and aluminum. A laminate of the above-described thermoplastic resin sheet or the above-described thermoplastic resin composition sheet and a metal sheet may also be used as the substrate sheet (B). The use of the metals can provide advantages such as increased rigidity of the article and thinning of the article.

The thickness of the substrate sheet (B) is typically from 50 to 400 $\mu$m for a substrate sheet (B) formed of the thermoplastic resin or the thermoplastic resin composition and typically from 30 to 300 $\mu$m for a substrate sheet (B) formed of a laminate of the thermoplastic resin or the thermoplastic resin composition and the metal sheet.

One preferred laminate to serve as the substrate sheet (B) is a laminate composed of:

a thermoplastic resin unstretched sheet (B-1) formed of any of the above-described thermoplastic resins that can be used in the substrate sheet (B) and thermoplastic resin compositions thereof; and
a biaxially stretched polyester resin film (B-2), which will be described below.

The laminate to serve as the substrate sheet (B) may be obtained by any suitable technique. For example, techniques such as dry lamination, heat lamination, extrusion lamination, and coextrusion can be used.

Lamination of the transparent resin sheet (A) and the substrate sheet (B) is typically carried out by the dry lamination technique, although the other techniques such as heat lamination, extrusion lamination and coextrusion may also be used.

The transparent resin sheet (A) and the substrate sheet (B) may be bonded together using any adhesive that can provide sufficient adhesion, including commonly used adhesives such as acryl-based, ethylene vinyl acetate-based, vinyl acetate-based, polyester-based, polyurethane-based, epoxy resin-based, chloroprene rubber-based, and styrene-butadiene rubber based adhesives. The adhesive layer may be deposited by any known web application technique. Specifically, techniques such as roll coating, gravure coating, reverse roll coating, roll brushing, spray coating, air knife coating, and die coating may be used. If necessary, optional diluents, such as 1-methoxy-2-propanol, n-butyl acetate, toluene, methyl ethyl ketone, methyl isobutyl ketone, ethyl acetate and acetone, may be used.

The resulting laminate of the transparent resin sheet (A) and the substrate sheet (B) must be such that it can be processed by the bending process. Specifically, it must have the minimum bend radius of 500 mm or less.

Preferably, the minimum bend radius is 50 mm or less, more preferably 15 mm or less, and even more preferably 10 mm or less.

The lower limit of the minimum bend radius is not limited to any specific value. A smaller radius can lead to an article having a curve surface with a larger curvature and is thus preferred.

As described above, the minimum bend radius of the laminate can be determined by bending the substrate sheet (B) side of the laminate inward to form a curved surface.

The article of the present invention has a curved surface. Articles with no curved surfaces or with a curved surface with a large radius of curvature can be process even by the process described in Patent Document 1. In contrast, the laminate of the hard coat (E), transparent resin sheet (A) and the substrate sheet (B) has a minimum bend radius of 500 mm or less and can therefore have a curved surface formed therein that has a radius of curvature of 500 mm.

The radius of curvature can be defined in FIG. 1 as follows:

given that:

$\Delta S$ is the length of the curve from point M to point N;
$\Delta\alpha$ is the difference between the slope of the tangent at point M and the slope of the tangent at point N; and
O is the intersection of a line perpendicular to and intersecting the tangent at point M and a line perpendicular to and intersecting the tangent at point N,

then the curve from point M to point N can be approximated by an arch if $\Delta S$ is small enough. The radius of this arch can then be defined as the radius of curvature.

Given that R is the radius of curvature, the angle MON = $\Delta\alpha$ holds. If $\Delta S$ is small enough, so is $\Delta\alpha$. Hence, $\Delta S = R\Delta\alpha$ holds. This can be rewritten as $R = \Delta S/\Delta\alpha$

The article of the present invention may further include a printed layer (C) between layers of the laminate of the transparent resin sheet (A) and the substrate sheet (B) or between layers of the laminate as the substrate sheet (B).

FIG. 2 is a schematic cross-sectional view illustrating exemplar articles each having a printed layer (C).

The article 10 provided in the form shown in FIG. 2A further includes a printed layer (C) between a transparent resin sheet (A) and a substrate sheet (B).

The article 12 provided in the form shown in FIG. 2B further includes a printed layer (C’) between a thermoplastic resin unstretched sheet (B-1) and a biaxially stretched polyester resin film (B-2).

The article 14 provided in the form shown in FIG. 2C further includes a printed layer (C) between a transparent resin sheet (A) and a substrate sheet (B) and further includes a printed layer (C’) between a thermoplastic resin unstretched sheet (B-1) and a biaxially stretched polyester resin film (B-2).

The printed layers (C), (C’) serve to impart an aesthetic appearance to the articles and can be deposited by printing any desired pattern using any ink and any printing machine. The printing may be applied to either of the transparent resin sheet (A) and the substrate sheet (B). The pattern to be printed may be a wood grain pattern, a stone grain pattern resembling stone such as marble, a textile pattern resembling cloth or fabric, a tile pattern, a brick pattern, a parquet pattern, a patchwork, or any other desired pattern. The ink for printing may be any ink formed by appropriately mixing a pigment, a solvent, a stabilizer, a plasticizer, a catalyst, a hardening agent or any other desirable components with a binder. Examples of the binder include resins such as polyurethane resins, vinyl chloride-vinyl acetate copolymer resin, vinyl chloride-vinyl acetate-acryl copolymer resin, chlorinated polypropylene resin, acrylic resin polyester resin, polyamide resin, butyral resin, polystyrene resin, nitrocellulose resin and cellulose acetate resin, and resin compositions thereof.

FIG. 3 is a schematic cross-sectional view of an article embodying the present invention, in which the article 15 includes a hard coat (E) on the surface side of the transparent resin sheet (A). When desired, the substrate sheet may be composed of a thermoplastic resin unstretched sheet (B-1) and a biaxially stretched polyester resin film (B-2). Furthermore, the above-described printed layers (C), (C’) may also be provided.

Provision of the hard coat (E) further increases the scratch resistance of the article. The coating material for depositing the hard coat (E) preferably has high transparency and high gloss in order to ensure glass-like aesthetic appearance. Examples of such coating materials for depositing the hard coat include active energy ray-curable resin compositions.

The active energy ray-curable resin composition is a composition that is polymerized and cured by UV rays or electron beams to form a coating. Examples of the active energy ray-curable resin composition include compositions that contain, along with a compound having two or more isocyanate groups (-N=C=O) in one molecule thereof and/or a photopolymerization initiator, one or more of the following or a resin containing one or more of the following as its constituent monomer: (meth)acryloyl group-containing prepolymers or oligomers, such as polyurethane (meth)acrylate, polyester (meth)acrylate, polyacryl (meth)acrylate, epoxy (meth)acrylate, polyalkylene glycol poly(meth)acrylate, and polyether (meth)acrylate; (meth)acrylate group-containing monofunctional reactive monomers, such as methyl (meth)acrylate, ethyl (meth)acrylate, n-butyl (meth)acrylate, hexyl (meth)acrylate, 2-ethylhexyl (meth)acrylate, lauryl (meth)acrylate, isobornyl (meth)acrylate, dicyclopentenyl (meth)acrylate, dicyclopentenyloxyethyl (meth)acrylate, phenyl (meth)acrylate, phenyl cellosolve (meth)acrylate, 2-methoxyethyl (meth)acrylate, hydroxyethyl (meth)acrylate, hydroxypropyl (meth)acrylate, 2-acryloyloxyethyl hydrogen phthalate, dimethylaminoethyl (meth)acrylate, trifluoroethyl (meth)acrylate, and trimethylsiloxyethyl methacrylate; monofunctional reactive monomers, such as N-vinylpyrrolidone and styrene; (meth)acrylate group-containing bifunctional reactive monomers, such as diethylene glycol di(meth)acrylate, neopentyl glycol di(meth)acrylate, 1,6-hexanediol di(meth)acrylate, polyethylene glycol di(meth)acrylate, 2,2’-bis(4-(meth)acryloyloxypolyethyleneoxyphenyl)propane, and 2,2’-bis(4-(meth)acryloyloxypolypropyleneoxyphenyl)propane; (meth)acrylate group-containing trifunctional reactive monomers, such as trimethylolpropane tri(meth)acrylate and trimethylolethane tri(meth)acrylate; (meth)acrylate group-containing tetrafunctional reactive monomers, such as pentaerythritol tetra(meth)acrylate; and (meth)acrylate group-containing hexafunctional reactive monomers, such as dipentaerythritol hexaacrylate.

As used herein, "(meth)acrylate" refers to an acrylate or a methacrylate.

Examples of the compound having two or more isocyanate groups in one molecule thereof include urethane crosslinking agents, including methylene bis-4-cyclohexyl isocyanate; polyisocyanates, such as a trimethylol propane adduct of trilene diisocyanate, a trimethylol propane adduct of hexamethylene diisocyanate, a trimethylol propane adduct of isophorone diisocyanate, an isocyanurate form of trilene diisocyanate, an isocyanurate form of hexamethylene diisocyanate, an isocyanurate form of isophorone diisocyanate, and a biuret form of hexamethylene diisocyanate; and block-type isocyanates of the foregoing polyisocyanates. These may be used either individually or in combination of two or

more. When necessary, catalysts such as dibutyl tin laurate and dibutyl tin diethyl hexoate may be added during crosslinking.

Examples of the photopolymerization initiator include benzophenone compounds, such as methyl-O-benzoyl benzoate, 4-methylbenzophenone, 4,4'-bis(diethylamino)benzophenone, o-benzoyl methyl benzoate, 4-phenyl benzophenone, 4-benzoyl-4'-methyldiphenylsulfide, 3,3",4,4'-tetra(tert-butylperoxycarbonyl)benzophenone, and 2,4,6-trimethyl benzophenone; benzoin compounds, such as benzoin, benzoin methyl ether, benzoin ethyl ether, benzoin isopropyl ether, and benzyl methyl ketal; acetophenone compounds, such as acetophenone, 2,2-dimethoxy-2-phenyl acetophenone, and 1-hydroxycyclohexyl phenyl ketone; anthraquinone compounds, such as methyl anthraquinone, 2-ethyl anthraquinone, and 2-amyl anthraquinone; thioxanthone, 2,4-diethylthioxanthone, 2,4-diisopropylthioxanthone; alkylphenone compounds, such as acetophenone dimethyl ketal; triazine compounds; biimidazole compounds; acylphosphine oxide compounds; titanocene compounds; oxime ester compounds; oxime phenyl acetate ester compounds; hydroxyl ketone compounds; and aminobenzoate compounds. These may be used either individually or in combination of two or more.

Particularly preferred active energy ray-curable resin compositions (Q) are those that contain:

(α) an ethanolamine-modified polyether (meth)acrylate having the following formula (1):

(Chemical Formula 2)

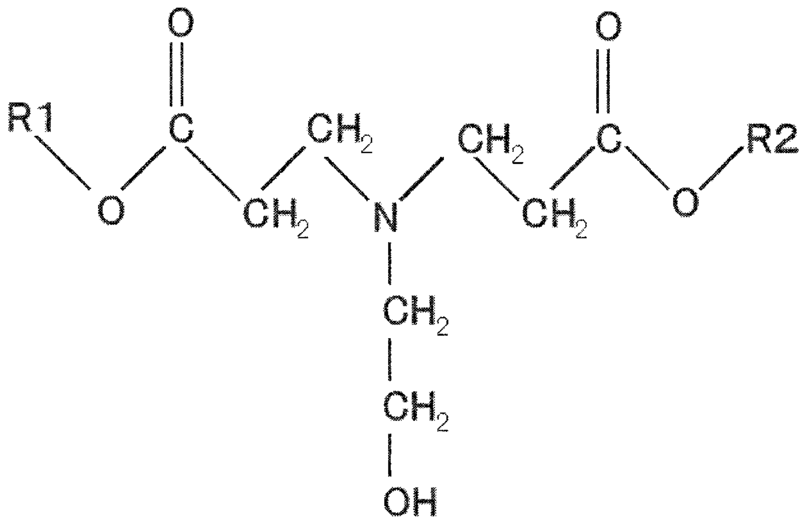

(1)

wherein R1 and R2 are each a polyether (meth)acrylate residue having one or more (meth) acryloyloxy groups, provided that the total number of the (meth)acryloyloxy groups in R1 and the (meth)acryloyloxy groups in R2 is equal to or greater than 3;

(β) a polyisocyanate having two or more isocyanate groups in one molecule thereof; and

(γ) a photopolymerization initiator,

and in which the ratio (a/b) of the number (a) of hydroxyl groups in the component (α) to the number (b) of isocyanate groups in the component (β) is in the range of 0.5 to 1.2.

In the formula above, R1 and R2 are each a polyether (meth) acrylate residue having one or more (meth) acryloyloxy groups and the total number of the (meth) acryloyloxy groups in R1 and the (meth)acryloyloxy groups in R2 is equal to or greater than 3, preferably from 3 to 9, and more preferably 4. If the total number of the (meth)acryloyloxy groups in R1 and the (meth)acryloyloxy groups in R2 in the formula (1) above is two or less, then the scratch resistance, the wear resistance and the stain resistance of the resulting coating will be decreased. While R1 and R2 may or may not be different from each other, R1 and R2 are preferably the same.

The component (α) acts to capture oxygen radicals. While compounds containing a (meth)acryloyloxy group(s) are generally cured by radial polymerization, the polymerization of such radically polymerizable compounds tends to be inhibited by the oxygen radicals present in the air. The curing reaction is particularly slowed by oxygen radicals at the coating surface. In order to ensure sufficient curing at the surface, the duration of the irradiation of the active energy rays may be extended. However, this can slow the production line significantly and can cause the curing reaction to proceed to an excessive degree inside the coating where the effect of the oxygen radicals is relatively small. As a result,

the resulting hard coat may become brittle and less bendable. Meanwhile, the active energy ray-curable resin composition (Q), in which the component (a) has a specific structure as shown by the formula (1) above, is less susceptible to the inhibition by oxygen radicals. Accordingly, the resulting hard coat can achieve a faster curing speed, as well as high scratch resistance, wear resistance, stain resistance and bend resistance. It is believed that a radical is generated as the hydrogen is withdrawn from the methylene group adjacent to the nitrogen atom of the ethanolamine residue present in the component (α) and this radical is bound by an oxygen radical, capturing it.

The component (α) can be produced by reacting a compound represented by the formula (3) below with a compound represented by the formula (4) below in the presence of ethanolamine at room temperature. The reaction is highly active at room temperature and does not require any catalysts. A solvent may be added to decrease the apparent concentration and to thereby prevent gelation.

$$R1\text{-}O\text{-}C(=O)\text{-}CH{=}CH_2 \qquad (3)$$

$$R2\text{-}O\text{-}C(=O)\text{-}CH{=}CH_2 \qquad (4)$$

wherein R1 and R2 are as defined above.

It should be noted that various by-products are generated other than the intended component (α) during the production of the component (α) according to the above-described process. However, it is a common practice in the art of coating to use the component (α) with these by-products present therein.

Examples of the compounds represented by the formulas (3) and (4) include TPGDA (trade name) (tripropylene glycol diacrylate) and OTA480 (trade name) (glyceryl propoxy triacrylate), each manufactured by Daicel SciTech, and dipentaerythritol hexaacrylate manufactured by Nippon Kayaku.

OTA480 described above is the compound of the formula (5) below:

(Chemical Formula 3)

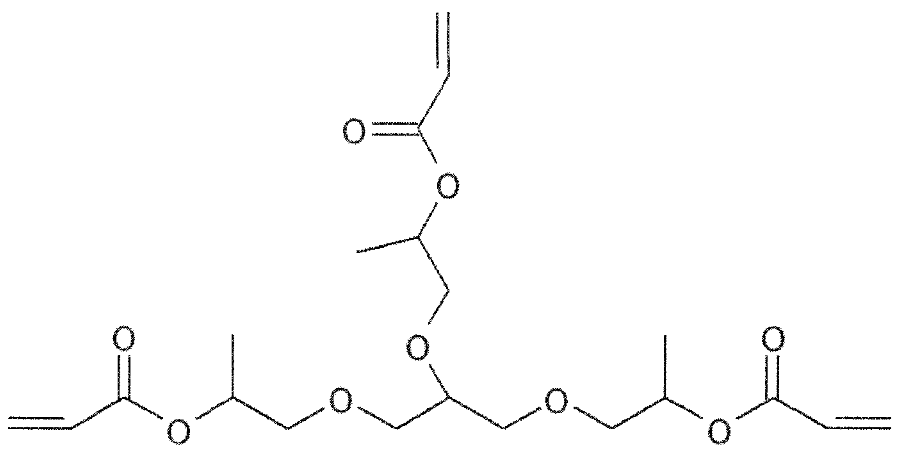

(5)

The compound of the formula (2) below is particularly preferred for use as the component (α).

(Chemical Formula 4)

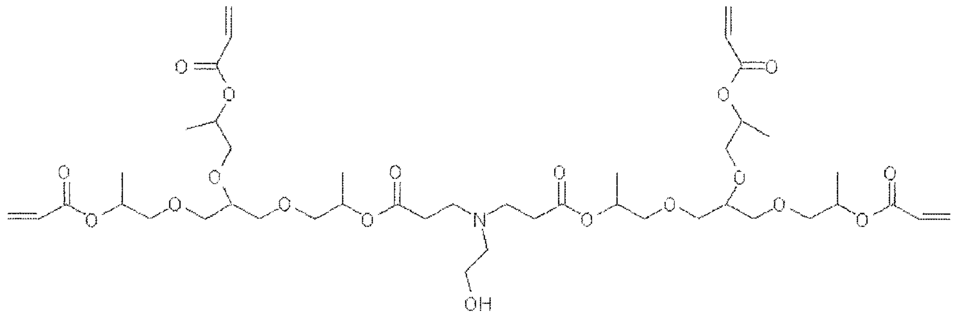

(2)

When the component (α) is the compound of the formula (2) above, the resulting composition has high storage stability and the resulting hard coat achieves a highly favorable balance of bend resistance, three-dimensional formability, scratch resistance, wear resistance and stain resistance. In a production line for producing a laminate by applying a coating material onto a substrate film, a separator is typically placed on the coating to prevent the blocking of the laminate onto itself as the laminate is wound into a roll. However, the need to use the separator can be advantageously eliminated when the component (α) is the compound of the formula (2) above because of the extremely fast curing.

The component (β) may be any of the compounds having two or more isocyanate groups in one molecule thereof, which are listed above.

Of such compounds, particularly preferred are those having 3 or more isocyanate groups in one molecule thereof in view of the bend resistance of the hard coat and the storage stability of the coating material. In particular, the compound represented by the formula (6) below that is a trimer of hexamethylene diisocyanate and has an isocyanate ring structure and the compound represented by the formula (7) that is a trimer of hexamethylene diisocyanate and is a trimethylolpropane adduct may be preferably used. These compounds have a unique structure with the isocyanate groups situated at respective spaced-apart positions on ends of the hexamethylene chains. As a result, the resulting hard coat is resilient and achieves high scratch resistance and wear resistance.

(Chemical Formula 5)

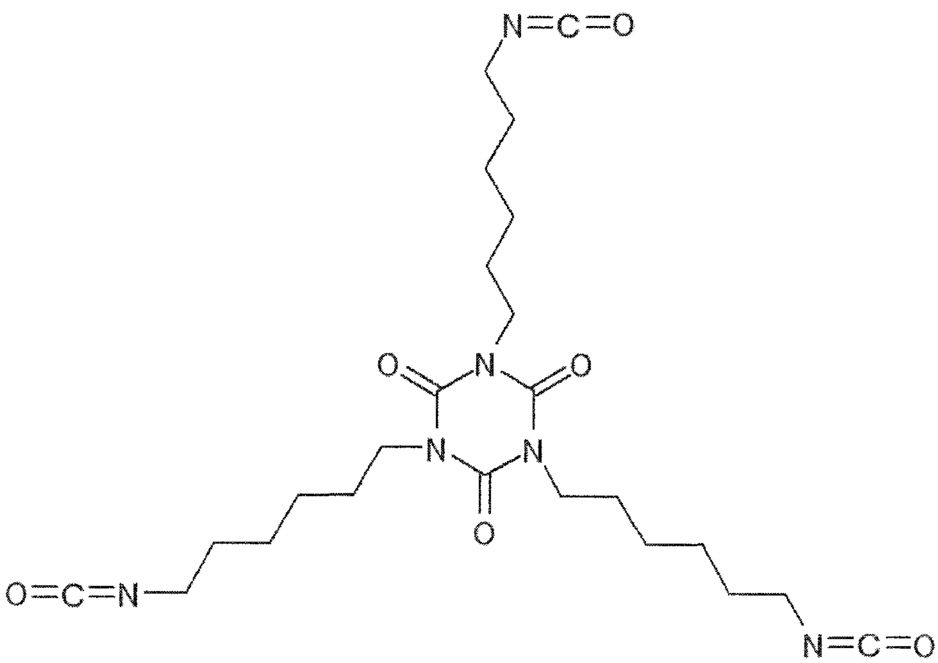

(6)

(Chemical Formula 6)

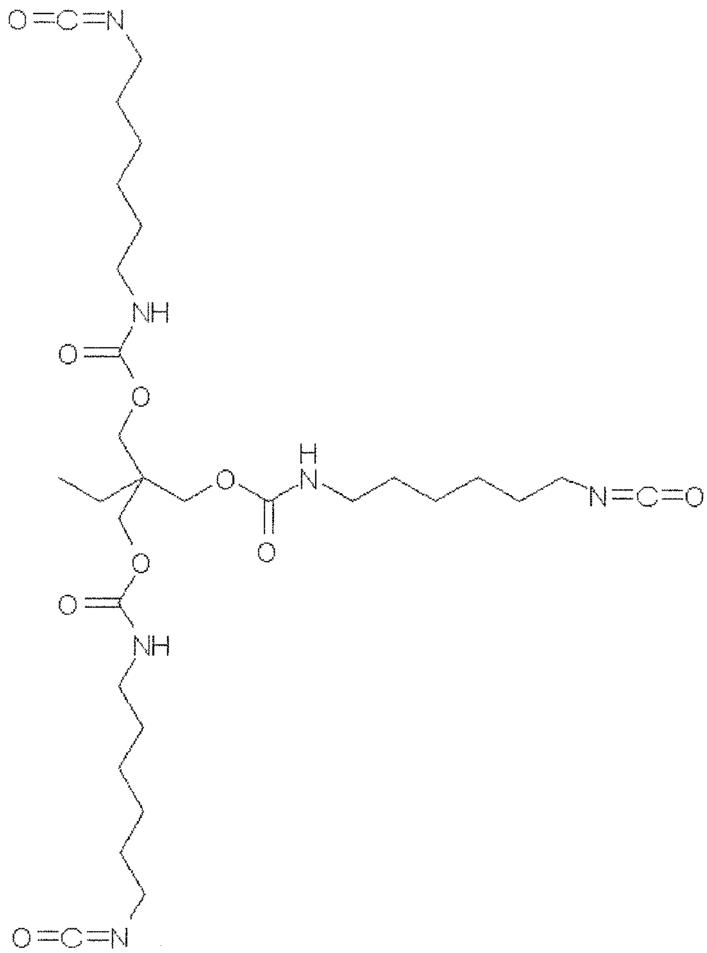

(7)

The above-described resin composition cures as the hydroxyl groups in the component (α) react with the isocyanate groups in the component (β). In the resin composition of the present invention, the ratio (a/b) of the number (a) of hydroxyl groups in the component (α) to the number (b) of isocyanate groups in the component (β) is in the range of 0.5 to 1.2, preferably in the range of 0.7 to 1.1, in order to ensure sufficient curing. If the ratio is less than the foregoing lower limit, the resulting coating will have decreased bend resistance. If the ratio is greater than the foregoing upper limit, the resulting coating will become less resistant to aqueous stains, such as stains made by a water-based marker pen.

In the present description, the number of hydroxyl groups per unit amount of the component (α) was determined based on JIS-K-1557-1:2007. Specifically, the hydroxyl groups of the component (α) were acetylated with an acetylating agent (i.e., pyridine solution of acetic anhydride) and the excess acetylating agent was hydrolyzed by water. The number of hydroxyl groups was then determined by titrating the resulting acetic acid with an ethanol solution of potassium hydroxide using an Automatic Potentiometric Titrator AT-610 available from Kyoto Electronics Manufacturing. Also, the number of isocyanate groups per unit amount of the component (β) was determined by based on JIS-K-7301-1:1995. Specifically, the isocyanate groups of the component (β) were reacted with di-n-butylamine and the excess di-n-butylamine was titrated with an aqueous hydrochloric acid using an Automatic Potentiometric Titrator AT-610 available from Kyoto Electronics Manufacturing.

The component (γ) may be any of the above-described photopolymerization initiators.

The amount of the component (γ) can be suitably selected depending on the other components and the desired thickness of the coating. The amount of the component (γ) is typically from about 0.5 to about 10 parts by mass with respect to 100 parts by part of the component (α).

When desired, the above-described active energy ray-curable resin composition (Q) may contain one or two or more of additives such as antioxidants, weather resistance stabilizers, light resistance stabilizers, UV absorbers, thermostabilizers, antistatics, surfactants, coloring agents, leveling agents, thixotropic agents and fillers.

A preferred optional component is fine particles with a particle diameter of 1 nm to 300 nm.

The fine particles may be used in an amount of 1 to 50 parts by mass, preferably 3 to 25 parts by mass, with

respect to 100 parts by mass of the component ($\alpha$) to increase the hardness of the hard coat (E).

The fine particles may be either inorganic or organic fine particles.

Examples of the inorganic fine particles include silica (silicon dioxide); metal oxide fine particles, such as aluminum oxide, zirconia, titania, zinc oxide, germanium oxide, indium oxide, tin oxide, indium tin oxide, antimony oxide and cerium oxide; metal. fluoride fine particles, such as magnesium fluoride and sodium fluoride; metal fine particles; metal sulfide fine particles; and metal nitride fine particles.

Examples of the organic fine particles include resin beads of a styrene resin, an acrylic resin, a polycarbonate resin, an ethylene resin, a cured resin of an amino compound and formaldehyde.

These may be used either individually or in combination of two or more.

In order to increase the dispersibility of the fine particles in the coating material and increase the hardness of the resulting coating, the surface of these fine particles may be treated with silane coupling agents, such as vinyl silane and amino silane; titanate coupling agents; aluminate coupling agents; organic compounds having reactive functional groups including ethylenic unsaturated bond groups, such as (meth)acryloyl groups, vinyl groups and allyl groups, and epoxy groups; and surface treatment agents, such as fatty acids and metal salts of fatty acids.

Of these, fine particles of silica and aluminum oxide are preferred to obtain a hard coat (E) with a higher hardness. Silica fine particles are more preferred. Commercially available products of the silica fine particles include SNOWTEX (trade name) available from Nissar Chemical Industries and QUARTRON (trade name) available from Fuso Chemical.

The above-described fine particles must have a particle size of 300 nm or less to retain the transparency of the hard coat (E). If the particle size is too large, the hardness of the hard coat (E) may not be improved as desired. The fine particles preferably have a particle size of 200 nm and more preferably 120 nm or less. While the lower limit of the particle size is not limited to any specific size, commonly available particles have a particle size of at least 1 nm.

In the present description, the particle size of the fine particles is 50% percentile below which 50 mass% of smaller particles fall in the particle size distribution curve determined by using a laser diffraction/scattering particle size analyzer MT3200II (trade name) available from Nikkiso.

When desired, the above-described active energy ray-curable resin composition (Q) may contain a solvent for diluting the resin composition to a concentration suitable for coating. The solvent may be any solvent that does not react with the components of the curable resin composition and other optional components or catalyze (promote) the self-reaction (including decomposition) of these components. The solvent may be any of known solvents, including 1-methoxy-2-propanol, n-butyl acetate, toluene, methyl ethyl ketone, methyl isobutyl ketone, ethyl acetate, and diacetone alcohol.

The active energy ray-curable resin composition (Q) is obtained by mixing and stirring these components.

The hard coat (E) preferably has a thickness of 0.5 $\mu$m or greater. If the hard coat (E) is thinner than this thickness, then the scratch resistance may not be improved as desired. While the upper limit of the thickness of the hard coat (E) is not limited to any specific thickness, the thickness is at most 60 $\mu$m since an undesirably thick hard coat only leads to increased costs.

FIG. 4 is a schematic cross-sectional view of an exemplar article, in which the article 16 includes a layer of a biaxially stretched polyester resin film (D) on the surface side of the transparent resin sheet (A). When desired, the substrate sheet may be composed of a thermoplastic resin unstretched sheet (B-1) and a biaxially stretched polyester resin film (B-2). Furthermore, the above-described printed layers (C), (C') may also be provided.

The biaxially stretched polyester resin film (D) has high gloss and high transparency and can thus improve the glass-like aesthetic appearance of the article. It also has high solvent resistance, scratch resistance, impact resistance, and stain resistance and can enhance these properties of the article. Specific examples of the biaxially stretched polyester resin film include biaxially stretched polyester resin films formed of a polyester resin, such as polyethylene terephthalate, glycol-copolymerized polyethylene terephthalate, acid-copolymerized polyethylene terephthalate and polyethylene naphthalate or any combination thereof. The thickness of the biaxially stretched polyester resin film is typically in the range of 10 $\mu$m to 100 $\mu$m and preferably in the range of 15 $\mu$m to 50 $\mu$m. Commercially available examples of the biaxially stretched polyester resin film include EMBLET S25 (trade name) available from Unitika.

The above-described biaxially stretched polyester resin film may be used as the biaxially stretched polyester resin film (B-2).

The article of the present invention may further include a layer of the biaxially stretched polyester resin film (D) between the hard coat (E) and the substrate sheet (B). FIG. 5 is a schematic cross-sectional view of the article for illustrating this embodiment, in which the article 17 further includes a layer of the biaxially stretched polyester resin film (D) between the hard coat (E) and the transparent resin sheet (A). When desired, the substrate sheet may be composed of a thermoplastic resin unstretched sheet (B-1) and a biaxially stretched polyester resin film (B-2) . Furthermore, the above-described printed layers (C), (C') may also be provided.

FIG. 6 is a schematic cross-sectional view of an exemplar article, in which the article 18 includes a printed layer (F) between biaxially stretched polyester resin film (D) and the transparent resin sheet (A). In an embodiment of the present invention, a hard coat (E) (not shown in Fig. 6) may be provided on the surface side of the biaxially stretched

polyester resin film (D) and the substrate sheet may be composed of a thermoplastic resin unstretched sheet (B-1) and a biaxially stretched polyester resin film (B-2). Furthermore, the above-described printed layers (C), (C') may also be provided.

The above-described printed layer (F) serves to impart an aesthetic appearance to the article and may be deposited by printing any desired pattern using any ink and any printing machine as long as such a pattern does not affect the glass-like aesthetic appearance of the article. The printing may be applied to either of the biaxially stretched polyester resin film (D) and the transparent resin sheet (A). Specific patterns and inks for use are as in the above-described printed layer (C).

Prior to the deposition of the hard coat (E) in the article of the present invention, an anchor coat may be provided on the surface of the transparent resin sheet (A) or the biaxially stretched polyester resin film (D) that serves as a substrate so as to enhance the adhesion strength with the hard coat.

The anchor coat agent for depositing the anchor coat may be any anchor coat agent that is sufficiently soluble in a known solvent, such as 1-methoxy-2-propanol, n-butyl acetate, toluene, methyl ethyl ketone, methyl isobutyl ketone, ethyl acetate and acetone, and provides sufficient anchoring effect. Specifically, commonly used anchor coat agents, such as polyester-, acryl-, polyurethane-, acryl urethane- and polyester urethane-based anchor coat agents, may be used. Examples of commercially available products include VILON 24SS (trade name) available from Toyobo and AU2141NT available from Tokushiki.

When it is desired to provide an anchor coat, the anchor coat agent is applied to the surface of the transparent resin sheet (A) or the biaxially stretched polyester resin film (D) that serves as a substrate by a common technique and this anchor coat may be overlaid with the hard coat.

The thickness of the anchor coat is typically from about 0.1 to about 5 $\mu$m, preferably from 0.5 to from 2 $\mu$m.

The coating material and the anchor coat agent for the hard coat may be deposited by any known web application technique. Specifically, techniques such as roll coating, gravure coating, reverse roll coating, roll brushing, spray coating, air knife coating, and die coating may be used.

The bending process may be carried out by any suitable technique. For example, a laminate can be softened by properly heating it and the softened laminate can be bent by an R-bending mold or by pressing with male and female molds.

FIG. 7 is a schematic cross-sectional view illustrating a portion of the article of the present invention after a bending process.

In the embodiment of FIG. 7, a printed layer (C'), a biaxially stretched polyester resin film (B-2), a transparent resin sheet (A), a printed layer (F), a biaxially stretched polyester resin film (D), and a hard coat (E) are sequentially provided.

## Examples

The present invention will now be described with reference to examples, which are not intended to limit the present invention in any way.

### Example 1

#### Preparation of transparent resin sheet (A)

Using an acrylic resin composition (HT03Y (trade name) manufactured by Sumitomo Chemical) composed of 70 parts by mass of an acrylic resin (A1-1) and 30 parts by mass of an acrylic core shell rubber (A1-2), a 1-mn-thick transparent resin sheet was obtained by the T-die extrusion coating technique.

The haze value and the minimum bend radius were determined by the above-described procedures.

#### Preparation of substrate sheet (B-1)

A composition containing 100 parts by mass of a vinyl chloride resin (degree of polymerization = 1100, manufactured by Shin-Etsu Chemical), 20 parts by mass of a polyester plasticizer (HA-5 (trade name) manufactured by Kao), and 5 parts by mass of carbon black (MCF#1000 (trade name) manufactured by Mitsubishi Chemical) was formed into a film to obtain a 100-$\mu$m-thick substrate sheet (B-1).

#### Syntheses of component ($\alpha$-1)

To a glass beaker was added OTA480 manufactured by Daicel SciTech (trade name, glyceryl propoxy triacrylate of the formula (5) above) and 2-aminoethanol at a ratio of 2 mols of the former to 1 mol of the latter. The reaction was

allowed to proceed at 23°C for 72 hours to yield an ethanolamine-modified polyether acrylate (α-1) having the structure of the formula (2) above. The number of hydroxy groups per unit amount of the component (α-1) was determined to be 1.09 mol/kg.

Active energy ray-curable resin composition (Q) for hard coat (E)

100 parts by mass of the component (α-1) as the component (α), 25 parts by mass of CORONATE HX (β-1) manufactured by Nippon Polyurethane Industry (trade name, polyisocyanate of the formula (6) above) as the component (β),
7 parts by mass of benzophenone (γ-1) as the component (γ),
8 parts by mass of high purity colloidal silica with an average particle size of 80 nm as an other component, and
200 parts by mass of 1-methoxy-2-propanol (E-1) as a diluting solvent were stirred together to obtain an active energy ray-curable resin composition (Q).

Using by the above-described procedure, the number of isocyanate groups per unit amount of the component (β-1) was determined to be 5.12 mol/kg. Accordingly, the ratio (a/b) is calculated as follows:

$$(1.09 \times 100)/(5.12 \times 25) = 0.85$$

Biaxially stretched polyester resin film (D), hard coat (E), printed layer (F)

EMBLET S25 (trade name, 25 μm thickness), a biaxially stretched polyester resin film available from Unitika, was used as the biaxially stretched polyester resin film (D). An anchor coat agent (VILON 24SS (trade name) available from Toyobo) was applied to one side of the polyester resin film to a dry film thickness of 1 μm to obtain the biaxially stretched polyester resin film (D) having an anchor coat on one side thereof.

A coating material formed of the active energy ray-curable resin composition (Q) obtained above was applied over the anchor coat, dried, and irradiated with UV rays, and the resulting laminate was wound into a roll.

Using an applicator of the film Meyer Bar type, the application of the coating material was carried out in such a manner that the coating thickness after drying was 11 μm.

During the process, the line speed was 50 m/min and no separator was used.

A printed layer (F) was then deposited by printing a design pattern on the side opposite the hard coat (E) side using an ink containing a vinyl chloride-vinyl acetate copolymer resin as a vehicle. The deposited design pattern was such that it would impart a glass-like aesthetic appearance to the resulting article.

Printed layer (C')

EMBLET S25 (trade name, 25 μm thickness), a biaxially stretched polyester resin film available from Unitika, was used as the biaxially stretched polyester resin film (B-2). A design pattern was printed on one side of the polyester resin film using an ink containing a vinyl chloride-vinyl acetate copolymer resin as a vehicle.

Preparation of laminate of (A) and (B)

Using a two-part adhesive TAKELAC A-310/TAKENATE A-3 (12:1 mass ratio) available from Mitsui Chemicals, the transparent resin sheet (A), the substrate sheet (B), the film (D) with the hard coat (E) deposited on one side thereof and the printed layer (F) on the other side thereof, and the film (B-2) with the printed layer (C') deposited on one side thereof were dry-laminated so that the layers are stacked in the order shown in FIG. 7.

Using an applicator of the film Meyer Bar type, the application of the coating material was carried out in such a manner that the thickness after drying was 2.5 μm.

The laminated obtained above was conditioned at a temperature of 23°C ± 2°C at a RH of 50 ± 5% for 24 hours and the minimum bend radius (1) was measured by the above-described procedure.

Preparation of article having a curved surface

The laminated obtained above was conditioned at a temperature of 23°C ± 2°C at a RH of 50 ± 5% for 24 hours. Using an R-bending mold, the substrate sheet (B) side of the laminate was bent inward at a bend process temperature of 130°C ± 2°C along a direction perpendicular to the machine direction to form a curved surface. In this manner, an inverted U-shaped article was prepared.

The same value was achieved for the minimum value of the bend radius of the curved surface as the value of

(1) above.

A planar portion of the article was measured for the physical properties (2) to (6) by the procedures described below. The results are shown in Table 1.

Example 2

The same procedure was followed as in Example 1, except that the resin composition used as the transparent resin sheet (A) was composed of 99.5 parts by mass of K-1 300Y (trade name) available From Teijin Chemicals as the aromatic polycarbonate resin (A2-1), and 0.5 parts by mass of KANEACE B-56 (trade name), a methacrylate-styrene/butadiene rubber graft copolymer available from Kaneka, as the core shell rubber (A2-2), and a 1-mm-thick transparent resin sheet obtained by the T-die extrusion coating technique was used. The results are shown in Table 1.

Example 3

The same procedure was followed as in Example 1, except that the resin composition used as the transparent resin sheet (A) was composed of 99 parts by mass of Cadence GS 1 (trade name), a PETG resin available from Eastman Chemical Company, as the low crystalline aromatic polyester resin (A3-1), and 1 part by mass of KANEACE B-56 (trade name), a methacrylate-styrene/butadiene rubber graft copolymer available from Kaneka, as the core shell rubber (A3-2), and a 1-mm-thick transparent resin sheet obtained by the T-die extrusion coating technique was used. The results are shown in Table 1.

Examples 4 and 5

The same procedure was followed as in Example 1, except that the thickness of the transparent resin sheet (A) in each case was changed as shown in Table 1. The results are shown in Table 1.

Examples 6

The same procedure was followed as in Example 1, except that 42 parts by mass of SUMIDUR HT (trade name) (B-2), a polyisocyanate of the formula (7) above available from Sumitomo Bayer Urethane (the number of isocyanate groups per unit amount = 3.10 mol/kg), was used as the component (β) of the active energy ray-curable resin composition (Q). The results are shown in Table 2.

Examples 7 to 12

The same procedure was followed as in Example 1, except that the amount of the component (β-1) of the active energy ray-curable resin composition (Q) was changed as shown in Table 2. The results are shown in Table 2.

The value of the minimum bend radius (1) in Example 11 is greater than the minimum bend radius of the transparent resin sheet (A) because the hard coat (E) cracked. This is also the case with Examples 15 and 16.

Synthesis of component (α-2)

An ethanolamine-modified polyether acrylate (α-2) having two acryloyloxy groups was synthesized in the same manner as in the synthesis of the component (α-1), except that tripropylene glycol diacrylate (manufactured by Daicel SciTech) was used in place of OTA480 (trade name, manufactured by Daicel SciTech). The number of hydroxyl groups per unit amount of the component (α-2) was determined to be 1.51 mol/kg.

Example 13

The same procedure was followed as in Example 10, except that the component (α-2) was used as the component (α) of the active energy ray-curable resin composition (Q). While the line speed was 50 m/min as in Example 10 during the procedure, a separator was required for winding the laminate into a roll. The results are shown in Table 2.

Example 14

The same procedure was followed as in Example 1, except that tripropylene glycol diacrylate (manufactured by Daicel SciTech; the number of hydroxyl groups per unit amount = 0 mol/kg) (α-3) was used as the component (α) of the active energy ray-curable resin composition (Q), and 5 parts by mass of an alkylphenone photopolymerization initiator

(2-hydroxy-2-methyl-1-phenyl-propane-1-one, DAROCURE 1173 (trade name) available from Ciba Japan) (γ-2) was used as the component (γ). The line speed during the procedure was 30 m/min. The benzophenone (γ-1.) was not used as the component (γ) because the curing speed tends to be slow when the component (α) is (α-3) and the component (γ) is (γ-1) . (γ-2) was used as the component (γ) to allow the curing reaction between (α-3) and (β-1) to proceed at a faster rate without causing gelation. This is also the case with Examples 15 and 16. The amount of the component (γ) was 5 parts by mass since 7 parts by mass of the component (γ) is excessive and causes gelation. The results are shown in Table 2.

Example 15

The same procedure was followed as in Example 14, except that dipentaerythritol hexaacrylate (manufactured by Nippon Kayaku; the number of hydroxyl groups per unit amount = 0. 63 mol/kg) (α-4) was used as the component (α) and the amount of (β-1) was adjusted so that the ratio a/b would be 0.85 as in Example 1. The results are shown in Table 2. It should be noted that while (α-4) does not have any hydroxyl groups in its structure, hydroxyl groups are present in (α-4) since it contains a component resulting from the hydrolysis of a part of the acryloyloxy group. This is also the case with (α-5) in Example 16.

Example 16

The same procedure was followed as in Example 14, except that ditrimethylolpropane tetraacrylate (manufactured by Nippon Kayaku; the number of hydroxyl groups per unit amount = 0 . 35 mol/kg) (α-5) was used as the component (α) and the amount of (β-1) was adjusted so that the ratio a/b would be 0.85 as in Example 1. The results are shown in Table 2.

Example 17

The same procedure was followed as in Example 1, except that the high purity colloidal silica with an average particle size of 80 nm as the other component of the active energy ray-curable resin composition (Q) was not used. The results are shown in Table 2.

Testing method

(2) Pencil hardness

Using a pencil ("UNI" (trade name) manufactured by Mitsubishi Pencil), the hardness of the coating surface was evaluated under a 200 g load condition according to JIS K 5600-5-4.

(3) Scratch resistance 1

A test piece sized 200 mm (length) × 25 mm (width) was cut out from the laminate obtained above. The test piece was placed on a testing apparatus (JIS L 0849) with the coating surface facing upward. A piece of steel wool (#0000) was attached to the abrasion probe of the testing apparatus and a 1 kg load was placed on the probe. The abrasion probe was moved back and forth 5 times against the surface of the test piece. The surface was visually observed and rated according to the following criteria:

a double circle indicates that no scratch was observed;
a single circle indicates that 1 to 3 scratches were observed;
a triangle indicates that 4 to 1.0 scratches were observed; and
a cross indicates that 11 or more scratches were observed.

(4) Scratch resistance 2

A test piece sized 150 mm (length) × 75 mm (width) was cut out from the laminate obtained above. The test piece was placed on a glass plate with the coating surface facing upward. Under a 500 gf load, a 4-row brass brush manufactured by Nakaya Brush was moved back and forth 10 times against the surface of the test piece over a distance of 100 mm. The surface was visually observed and rated according to the following criteria:

a double circle indicates that no scratch was observed;

a single circle indicates that 1 to 3 scratches were observed;
a triangle indicates that 4 to 10 scratches were observed; and
a cross indicates that 11 or more scratches were observed.

(5) Stain resistance 1

Using an oil-based red marker pen, the coating surface of the laminate obtained above was stained with a spot. The stained portion was covered with a watch glass and left at room temperature for 24 hours. Subsequently, the stained portion was repeatedly wiped with sheets of KIMWIPE (trade name) impregnated with a sufficient amount of isopropyl alcohol until the stain is no longer transferred to KIMWIPE. This portion was visually observed and rated according to the following criteria:

a double circle indicates that no stain remained there;
a single circle indicates that a slight stain remained there;
a triangle indicates that a moderate stain remained there; and
a cross indicates that a significant stain remained there.

(6) Stain resistance 2

Using a water-based red marker pen, the coating surface of the laminate obtained above was stained with a spot. The stained portion was covered with a watch glass and left at room temperature for 24 hours. Subsequently, the stained portion was thoroughly rinsed with flushing water and repeatedly wiped with sheets of KIMWIPE (trade name) impregnated with a sufficient amount of water until the stain is no longer transferred to KIMWIPE. This portion was visually observed and rated according to the following criteria:

a double circle indicates that no stain remained there;
a single circle indicates that a slight stain remained there;
a triangle indicates that a moderate stain remained there; and
a cross indicates that a significant stain remained there.

Table 1

| | | Example 1 | Example 2 | Example 3 | Example 4 | Example 5 |
|---|---|---|---|---|---|---|
| (A) | Material of (A) | A1 | A2 | A3 | A1 | A1 |
| | Haze (%) | 2.7 | 2.3 | 3 | 3.5 | 1.4 |
| | Thickness (mm) | 1 | 1 | 1 | 3 | 0.5 |
| | Minimum bend radius (mm) | 7 | 12 | 9 | 15 | 3 |
| Article | (1) Minimum bend radius (mm) | 7 | 12 | 9 | 15 | 3 |
| | (2) Pencil hardness | H | H | H | H | H |
| | (3) Scratch resistance-1 | ◎ | ◎ | ◎ | ◎ | ◎ |
| | (4) Scratch resistance-2 | ◎ | ◎ | ◎ | ◎ | ◎ |
| | (5) Stain resistance-1 | ◎ | ◎ | ◎ | ◎ | ◎ |
| | (6) Stain resistance-2 | ○ | ○ | ○ | ○ | ○ |

Table 2

| | | Example 1 | Example 6 | Example 7 | Example 8 | Example 9 | Example 10 | Example 11 | Example 12 | Example 13 | Example 14 | Example 15 | Example 16 | Example 17 |
|---|---|---|---|---|---|---|---|---|---|---|---|---|---|---|
| (α) | (α−1) | 100 | 100 | 100 | 100 | 100 | 100 | 100 | 100 | | | | | 100 |
| (α') | (α−2) | | | | | | | | | 100 | | | | |
| | (α−3) | | | | | | | | | | 100 | | | |
| | (α−4) | | | | | | | | | | | 100 | | |
| | (α−5) | | | | | | | | | | | | 100 | |
| (β) | (β−1) | 25 | | 20 | 30 | 18 | 35 | 50 | 15 | 35 | 25 | 14 | 8 | 25 |
| | (β−2) | | 42 | | | | | | | | | | | |
| (γ) | (γ−1) | 7 | 7 | 7 | 7 | 7 | 7 | 7 | 7 | 7 | | | | 7 |
| | (γ−2) | | | | | | | | | | 5 | 5 | 5 | |
| Other | Silica | 8 | 8 | 8 | 8 | 8 | 8 | 8 | 8 | 8 | 8 | 8 | 8 | |
| Solvent | | 200 | 200 | 200 | 200 | 200 | 200 | 200 | 200 | 200 | 200 | 200 | 200 | 200 |
| | Ratio (a/b) | 0.85 | 0.85 | 1.07 | 0.71 | 1.18 | 0.61 | 0.43 | 1.42 | 0.84 | 0.00 | 0.85 | 0.85 | 0.85 |
| | Coating thickness μm | 11 | 11 | 11 | 11 | 11 | 11 | 11 | 11 | 11 | 11 | 11 | 11 | 11 |
| Evaluation results | Line speed (m/min) | 50 | 50 | 50 | 50 | 50 | 50 | 50 | 50 | 50 | 30 | 30 | 30 | 50 |
| | Separator | Not required | Not required | Not required | Not required | Not required | Not required | Not required | Not required | Required | Required | Required | Required | Not required |
| (A) | Haze (%) | 2.7 | 2.7 | 2.7 | 2.7 | 2.7 | 2.7 | 2.7 | 2.7 | 2.7 | 2.7 | 2.7 | 2.7 | 2.7 |
| | Thickness (mm) | 1 | 1 | 1 | 1 | 1 | 1 | 1 | 1 | 1 | 1 | 1 | 1 | 1 |
| | Minimum bend radius (mm) | 7 | 7 | 7 | 7 | 7 | 7 | 7 | 7 | 7 | 7 | 7 | 7 | 7 |
| Article | (1) Minimum bend radius (mm) | 7 | 7 | 7 | 7 | 7 | 7 | 20 | 7 | 7 | 7 | 50 | 25 | 7 |
| | (2) Pencil hardness | H | HB | H | H | F | H | HB | F | F | 5B | 4H | 3H | F |
| | (3) Scratch resistance-1 | ◎ | ○ | ◎ | ◎ | ◎ | ○ | △ | ○ | △ | × | ◎ | ◎ | ◎ |
| | (4) Scratch resistance-2 | ◎ | ○ | ◎ | ◎ | ◎ | ○ | ○ | ○ | × | × | ◎ | ○ | ◎ |
| | (5) Stain resistance-1 | ◎ | ◎ | ◎ | ◎ | ◎ | ◎ | ○ | ◎ | △ | × | ◎ | ◎ | ◎ |
| | (6) Stain resistance-2 | ○ | ○ | ○ | ◎ | △ | ◎ | ◎ | × | △ | × | △ | △ | ○ |

The results of Tables 1 and 2 indicate that the article of the present invention, which includes, from the surface side, a hard coat (E), a transparent resin sheet (A) and a substrate sheet (B) stacked in this order so as to appropriately control the haze and the thickness of the transparent resin sheet (A), can achieve a glass-like aesthetic appearance

while having a curved surface with a large curvature. Also, the hard coat (E) is of a specific type which provides articles with high surface hardness, scratch resistance and stain resistance.

Reference Numerals

- A: Transparent resin sheet
- B: Substrate sheet
- C, C', F: Printed layers
- D: Biaxially stretched polyester resin film
- E: Hard coat

## Claims

1. An article comprising, from the surface side, a hard coat (E), a transparent resin sheet (A) and a substrate sheet (B) in this order, the article having a curved surface,
wherein the transparent resin sheet (A) has a haze of 10% or less and a thickness of 0.2 to 10 mm, where haze is determined according to J1S K 7105; and
wherein the curved surface is formed by bending the substrate sheet (B) side inward;
wherein the minimum value of the bend radius of the curved surface is 500 mm or less; and
wherein the article is formed by curing a coating material comprising an active energy ray-curable resin composition in which the hard coat (E) comprises:

(α) an ethanolamine-modified polyether (meth)acrylate having the following formula (1):

(Chemical Formula 1)

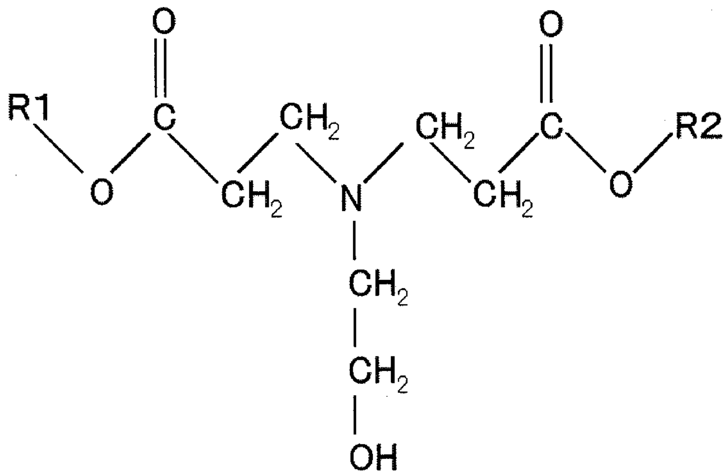

(1)

wherein R1 and R2 are each a polyether (meth) acrylate residue having one or more (meth) acryloyloxy groups, provided that the total number of the (meth)acryloyloxy groups in R1 and the (meth)acryloyloxy groups in R2 is equal to or greater than 3;
(β) a polyisocyanate having two or more isocyanate groups in one molecule thereof; and
(γ) a photopolymerization initiator,

wherein the ratio (a/b) of the number (a) of hydroxyl groups in the component (α) to the number (b) of isocyanate groups in the component (β) is in the range of 0.5 to 1.2.

2. The article according to claim 1, wherein the substrate sheet (B) comprises a laminate of a thermoplastic resin unstretched sheet (B-1) and a biaxially stretched polyester resin film (B-2) and the article comprises, from the surface

side, (A), (B-2) and (B-1) in this order.

**3.** The article according to claim 1 or 2, wherein the article comprises a printed layer (C) between the transparent resin sheet (A) and the substrate sheet (B).

**4.** The article according to claim 2, wherein the article further comprises a printed layer (C) between the transparent resin sheet (A) and the substrate sheet (B) and/or between the thermoplastic resin unstretched sheet (B-1) and the biaxially stretched polyester resin film (B-2).

**5.** The article according to any of claims 1 to 4, wherein the transparent resin sheet (A) comprises at least one layer selected from the group consisting of a layer of acrylic resin sheet (A1), a layer of aromatic polycarbonate resin sheet (A2), and a layer of amorphous or low crystalline aromatic polyester resin sheet (A3) .

**6.** The article according to any of claims 1 to 5, wherein the article further comprises a layer of biaxially stretched polyester resin film (D) between the hard coat layer (E) and the transparent resin sheet (A).

**7.** The article according to claim 6, wherein the article further comprises a printed layer (F) between the transparent resin sheet (A) and the biaxially stretched polyester resin film (D).

**Patentansprüche**

**1.** Gegenstand umfassend, von der Oberflächenseite aus, einen harten Überzug (E), eine transparente Harzplatte (A) und eine Substratplatte (B) in dieser Reihenfolge, wobei der Gegenstand eine gebogene Oberfläche aufweist, wobei die transparente Harzplatte (A) eine Trübe von 10 % oder weniger und eine Dicke von 0,2 bis 10 mm aufweist, wobei die Trübe J1S K 7105 entsprechend bestimmt wird; und
wobei die gebogene Oberfläche durch Biegen der Substratplatte (B) seitlich nach innen gebildet wird;
wobei der Mindestwert des Biegungsradius der gebogenen Oberfläche 500 mm oder weniger beträgt; und
wobei der Gegenstand durch Aushärten eines Beschichtungsmaterials gebildet wird, das eine durch aktive Energiestrahlen aushärtbare Harzzusammensetzung umfasst, wobei der harte Überzug (E) Folgendes umfasst:

($\alpha$) ein ethanolaminmodifiziertes Polyether(meth)acrylat, das die folgende Formel (1) aufweist:

(chemische Formel 1)

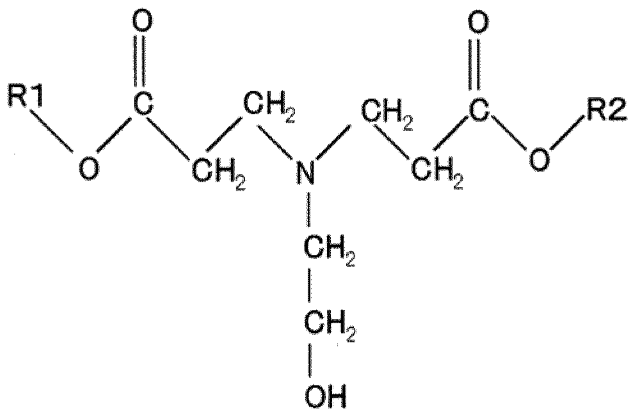

(1)

wobei R1 und R2 jeweils ein Polyether(meth)acrylatrest sind, der eine oder mehrere (Meth)acryloyloxygruppen aufweist, vorausgesetzt, dass die Gesamtzahl der (Meth)acryloyloxygruppen in R1 und der (Meth)acryloyloxygruppen in R2 gleich oder höher als 3 ist;
(ß) ein Polyisocyanat, das zwei oder mehr Isocyanatgruppen in einem Molekül davon aufweist; und
($\gamma$) einen Photopolymerisationsinitiator,

wobei das Verhältnis (a/b) der Anzahl (a) von Hydroxylgruppen in der Komponente ($\alpha$) zu der Anzahl (b) von Isocyanatgruppen in der Komponente (ß) im Bereich von 0,5 bis 1,2 liegt.

2. Gegenstand nach Anspruch 1, wobei die Substratplatte (B) ein Laminat aus einer thermoplastischen ungedehnten Harzplatte (B-1) und einer biaxial gedehnten Polyesterharzfolie (B-2) umfasst und der Gegenstand, von der Oberflächenseite aus, (A), (B-2) und (B-1) in dieser Reihenfolge umfasst.

3. Gegenstand nach Anspruch 1 oder 2, wobei der Gegenstand eine bedruckte Schicht (C) zwischen der transparenten Harzplatte (A) und der Substratplatte (B) umfasst.

4. Gegenstand nach Anspruch 2, wobei der Gegenstand ferner eine bedruckte Schicht (C) zwischen der transparenten Harzplatte (A) und der Substratplatte (B) und/oder zwischen der thermoplastischen ungedehnten Harzplatte (B-1) und der biaxial gedehnten Polyesterharzfolie (B-2) umfasst.

5. Gegenstand nach einem der Ansprüche 1 bis 4, wobei die transparente Harzplatte (A) mindestens eine Schicht umfasst ausgewählt aus der Gruppe bestehend aus einer Schicht einer Acrylharzplatte (A1), einer Schicht aromatischer Polycarbonatharzplatte (A2) und einer Schicht Platte aus amorphem oder niederkristallinem aromatischem Polyesterharz (A3).

6. Gegenstand nach einem der Ansprüche 1 bis 5, wobei der Gegenstand ferner eine Schicht aus biaxial gedehnter Polyesterharzfolie (D) zwischen der harten Überzugsschicht (E) und der transparenten Harzschicht (A) umfasst.

7. Gegenstand nach Anspruch 6, wobei der Gegenstand ferner eine bedruckte Schicht (F) zwischen der transparenten Harzplatte (A) und der biaxial gedehnten Polyesterharzfolie (D) umfasst.

**Revendications**

1. Article comprenant, à partir du côté de surface, un revêtement dur (E), une feuille de résine transparente (A) et une feuille de substrat (B) dans cet ordre, l'article ayant une surface incurvée,
dans lequel la feuille de résine transparente (A) a un trouble de 10 % ou moins et une épaisseur de 0,2 à 10 mm, le trouble étant déterminé conformément à la norme J1S K 7105 ; et
dans lequel la surface incurvée est formée en courbant la feuille de substrat (B) vers l'intérieur ;
dans lequel la valeur minimale du rayon de courbure de la surface incurvée est de 500 mm ou moins ; et
dans lequel l'article est formé en durcissant un matériau de revêtement comprenant une composition de résine durcissable par rayonnement énergétique actif, le revêtement dur (E) comprenant :

($\alpha$) un (méth)acrylate de polyéther modifié par éthanolamine ayant la formule (1) suivante :

(Formule chimique 1)

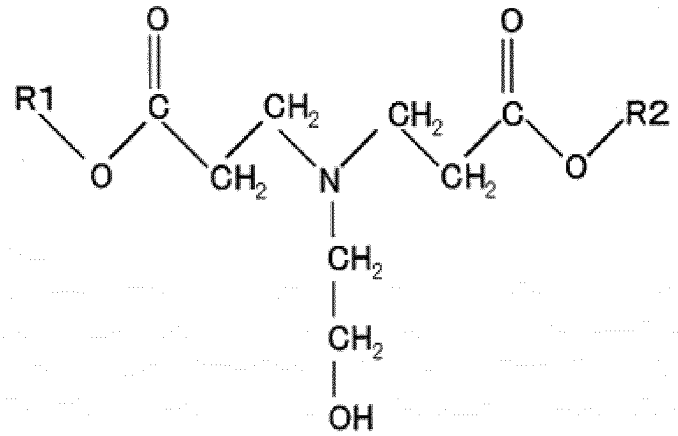

(1)

où R1 et R2 sont chacun un résidu de (méth) acrylate de polyéther ayant un ou plusieurs groupes (méth)acryloyloxy, pourvu que le nombre total des groupes (méth)acryloyloxy dans R1 et des groupes (méth) acryloyloxy dans R2 est égal ou supérieur à 3 ;
($\beta$) un polyisocyanate ayant deux ou plus de deux groupes isocyanate dans une molécule de celui-ci, et
($\gamma$) un initiateur de photopolymérisation,

dans lequel le rapport (a/b) entre le nombre (a) de groupes hydroxyle dans le composant (α) et le nombre (b) de groupes isocyanate dans le composant (β) se trouve dans la plage de 0,5 à 1,2.

2. Article selon la revendication 1, dans lequel la feuille de substrat (B) comprend un stratifié constitué d'une feuille non étirée de résine thermoplastique (B-1) et d'un film de résine de polyester étiré biaxialement (B-2) et l'article comprend, à partir du côté de surface, (A), (B-2) et (B-1) dans cet ordre.

3. Article selon la revendication 1 ou 2, dans lequel l'article comprend une couche imprimée (C) entre la feuille de résine transparente (A) et la feuille de substrat (B).

4. Article selon la revendication 2, dans lequel l'article comprend en outre une couche imprimée (C) entre la feuille de résine transparente (A) et la feuille de substrat (B) et/ou entre la feuille non étirée de résine thermoplastique (B-1) et le film de résine de polyester étiré biaxialement (B-2).

5. Article selon l'une quelconque des revendications 1 à 4, dans lequel la feuille de résine transparente (A) comprend au moins une couche choisie parmi le groupe constitué d'une couche de feuille de résine acrylique (Al), d'une couche de feuille de résine de polycarbonate aromatique (A2), et d'une couche de feuille de résine de polyester aromatique amorphe ou faiblement cristalline (A3).

6. Article selon l'une quelconque des revendications 1 à 5, dans lequel l'article comprend en outre une couche de film de résine de polyester étiré biaxialement (D) entre la couche de revêtement dure (E) et la feuille de résine transparente (A).

7. Article selon la revendication 6, dans lequel l'article comprend en outre une couche imprimée (F) entre la feuille de résine transparente (A) et le film de résine de polyester étiré biaxialement (D).

FIG.1

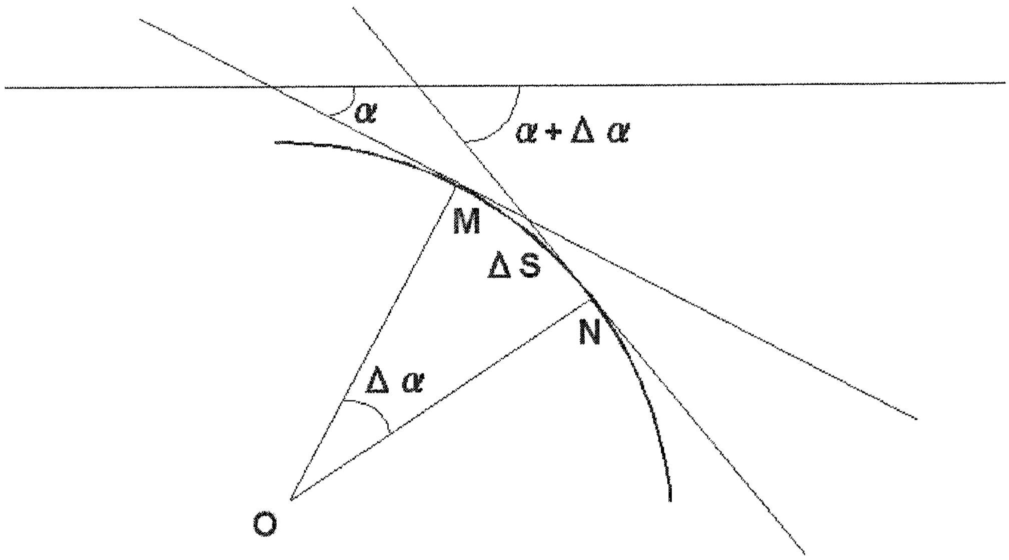

FIG.2 (a)

10

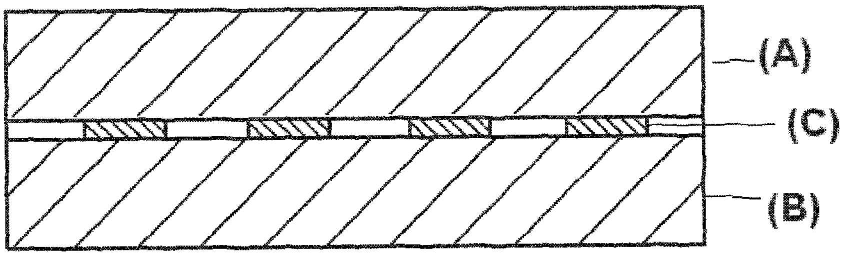


FIG.2 (b)

12

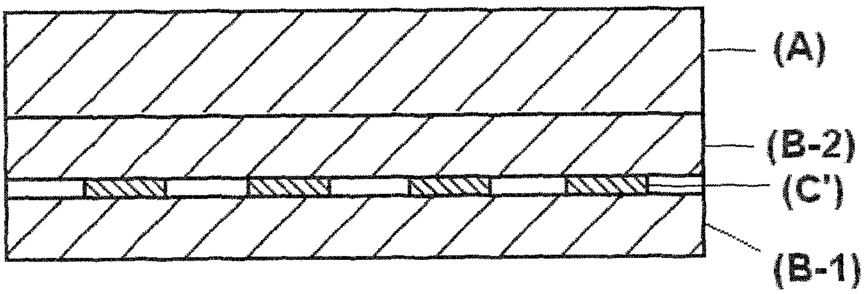


FIG.2 (c)

14

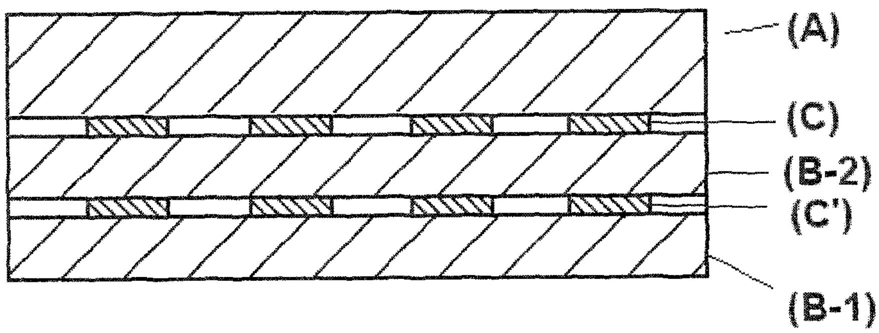

FIG.3

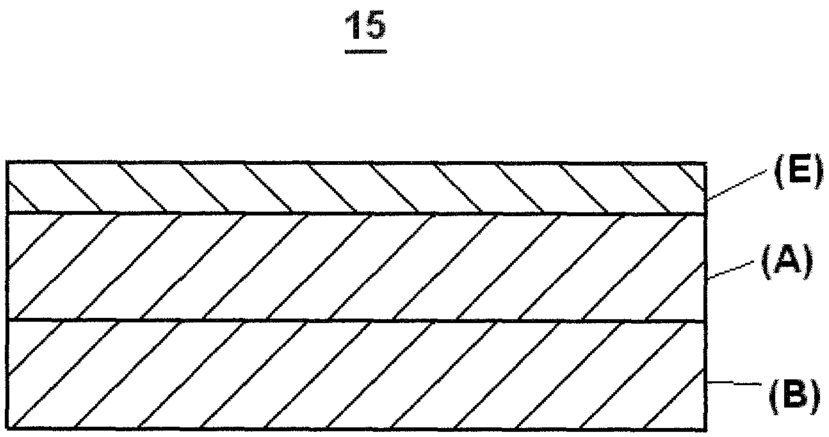


FIG.4

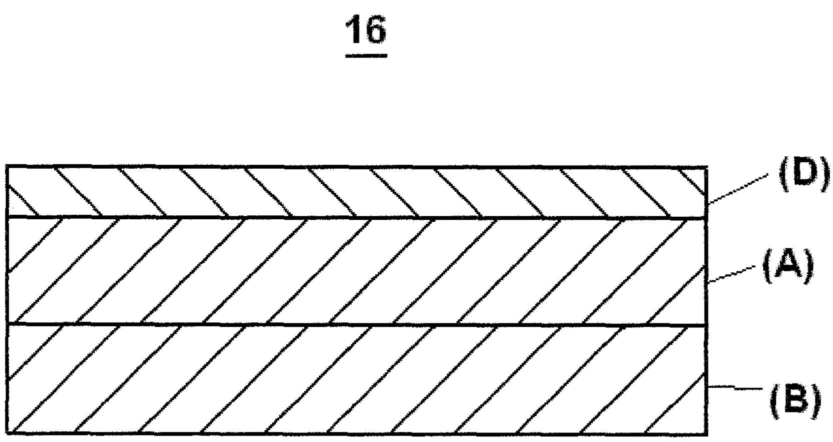

FIG.5

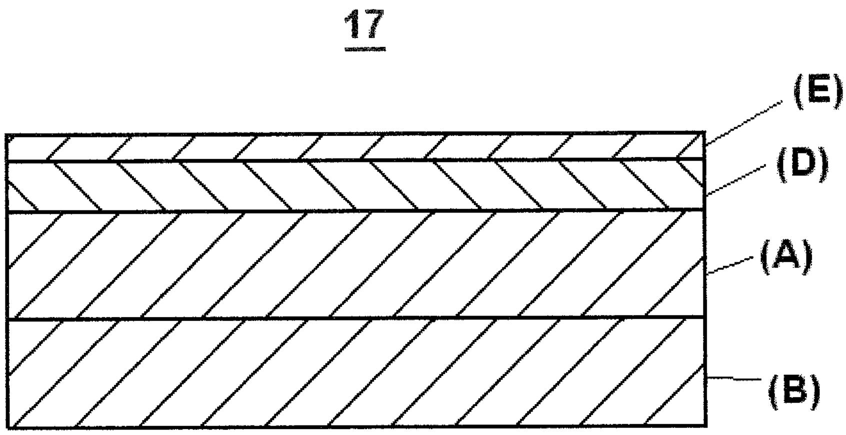


FIG.6

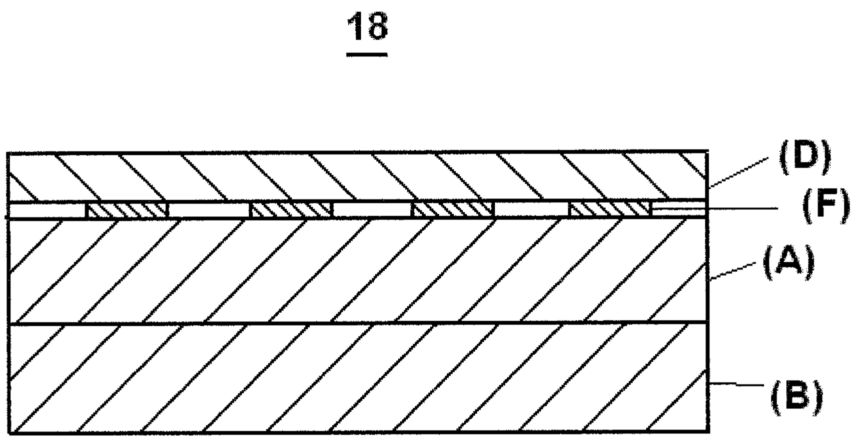

FIG.7

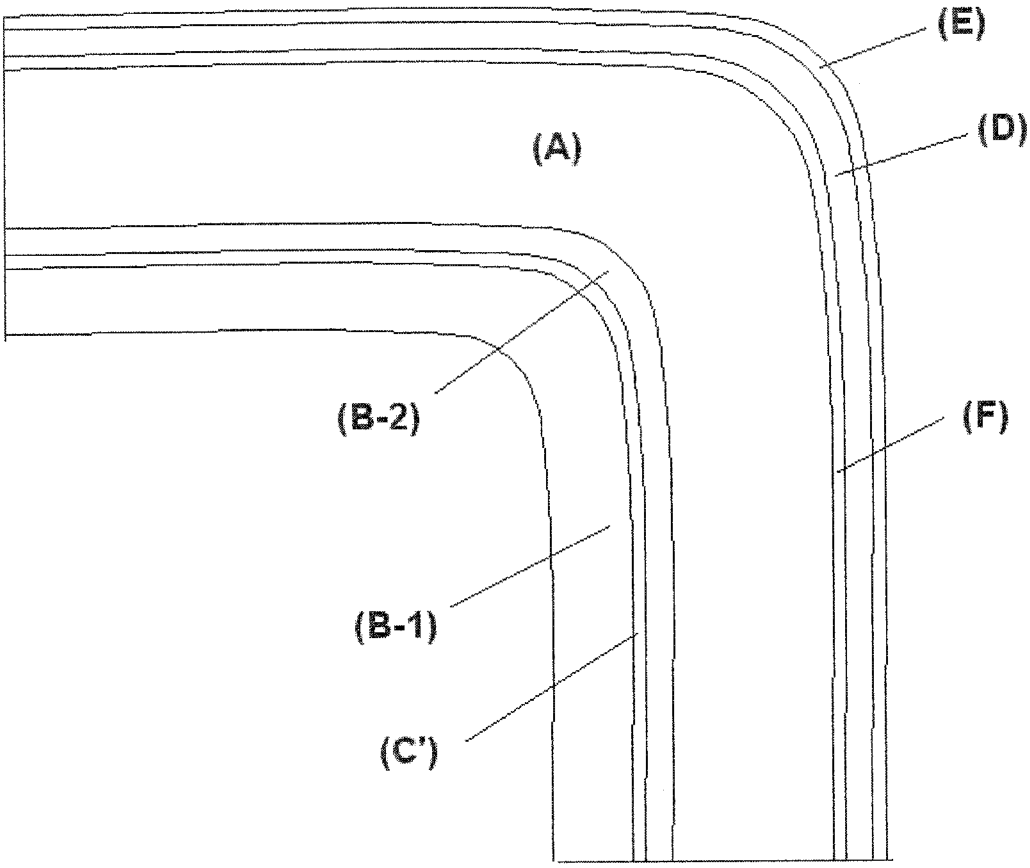

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2008174613 A
- JP 2012210792 A
- US 2010080968 A